# DEMANDE DE BREVET EUROPEEN

(11) **EP 1 082 894 A1**
(43) Date de publication de la demande: **14.03.2001**
(21) Numéro de dépôt: 00440238.4
(22) Date de dépôt: 01.09.2000
(51) Int. Cl.: A01G 31/00

(54) **Dispositif de pain horticole destiné à être utilisé dans des systèmes de culture hors sol**

(30) Priorité: 02.09.1999 FR 9911106
(71) Demandeur: Le Comptoir Roussillonnais Sarl, 66690 Palau del Vidre (FR)
(72) Inventeur: Vila, Francis, 66200 Theza (FR); Vila, Franck, 66200 Theza (FR)
(74) Mandataire: Arbousse-Bastide, Jean-Claude Philippe

(57) **Abrégé**

Dispositif de pain horticole destiné à être utilisé dans des systèmes de culture hors sol, du type comprenant un pain de substrat (1) entouré d'une enveloppe souple (2) étanche à l'eau.

Le pain de substrat organique (1) est constitué d'un amalgame de fibres organiques compactées et comporte à sa face inférieure, sur toute sa longueur ou toute sa largeur, au moins une rainure de drainage (3).

## Description

La présente invention a pour objet un dispositif de pain horticole destiné à être utilisé dans des systèmes de culture hors sol.

Les pains horticoles sont généralement constitués d'une enveloppe étanche renfermant un substrat compacté et ils sont couramment utilisés comme support de croissance pour des plantations maraîchères et horticoles hors sol, sous serre ou sous abri, les racines des plantes se développant dans le substrat, où les éléments nutritifs et l'eau sont apportés au moyen d'une irrigation au goutte à goutte.

Les substrats les plus couramment utilisés sont la tourne, la laine de roche et la pouzzolane. Ils sont généralement de forme parallélépipédiques et commercialisés sous cette forme.

Les pains de substrat sont le plus souvent enveloppés dans une gaine ou un sac d'un film de matière plastique tel que le polyéthylène ou le polychlorure de vinyle, qui les protège du milieu extérieur, et essentiellement de la lumière et des UV. Le film est étanche à l'eau et opaque, et il est de préférence de couleur blanche sur sa face extérieure et de couleur noire sur sa face intérieure en contact avec le substrat. On utilise le plus souvent des films de polyéthylène opaques ou formés de deux couches, blanche et noire, coextrudées. Le sac formé par le film est de dimensions supérieures à celles du pain de substrat et présente la même forme parallélépipédique.

Les substrats doivent être saturés en eau pour leur utilisation en culture, les dimensions du sac permettant de contenir le substrat après saturation. Dans un certain nombre d'exploitations, le sac est déposé sur une plaque de polystyrène qui permet d'éviter tout contact entre le substrat et le sol, limitant ainsi les risques d'infestation du substrat et donc de la culture par des micro-organismes pathogènes.

Lors de la mise en place des pains de substrat dans la serre, le substrat est saturé en eau pendant quelques jours, cette saturation initiale ayant pour but d'humidifier la totalité de la masse du substrat et de permettre l'expansion complète de ce dernier, dont le volume est multiplié par quatre.

Dans le cas d'utilisation des pains horticoles avec des plaques de polystyrène, si le substrat n'est pas convenablement centré dans le sac avant la saturation en eau, il peut se produire une accumulation de l'eau à une extrémité du sac, entraînant le glissement et la chute de ce dernier. Ces chutes nécessitent une intervention pour remettre les sacs en place, et sont donc cause d'une perte de temps pour l'installation de la culture.

Pour effectuer la saturation en eau du substrat, l'agriculteur doit pratiquer des fentes dans la gaine afin d'introduire le dispositif de goutte à goutte qui permettra l'apport d'eau. Cette manipulation nécessite un temps de travail estimé à 50 heures par hectare et s'avère être une source d'accidents du fait de l'utilisation d'outils tranchants, du type cutter, pour percer les sacs.

Une fois le sac gonflé, une nouvelle intervention est effectuée pour déposer sur le sac les jeunes plants, élevés à partir de semis ou de bouturages sur des cubes ou des bouchons. Un ou plusieurs plants sont placés sur les pains et espacés de façon régulière, le nombre de plants par pain étant variable selon les espèces cultivées et les conditions de culture.

Lors d'une troisième étape, appelée plantation ou transplantation, la face supérieure du sac est découpée au cutter à la dimension du cube ou du bouchon puis le plant est déposé sur le substrat. Le plant et le substrat sont alors en contact, ce qui permet le passage et la croissance des racines au sein du substrat. Cette opération de découpe nécessite un temps de travail estimé à 80 heures par hectare et représente de nouveau une source d'accidents pour l'agriculteur et les ouvriers serristes.

Enfin, lors de la mise en culture, une dernière intervention est nécessaire pour couper les bords inférieurs des sacs et y pratiquer des fentes de drainage, qui assurent l'évacuation de l'excès d'eau d'arrosage.

Il est d'usage dans les systèmes de culture hors sol de mesurer l'efficacité de l'irrigation par la mesure du pourcentage de drainage. Le pouvoir drainant du substrat doit donc rester relativement constant tout au long du cycle de production.

L'inconvénient des substrats organiques est la dégradation de leur texture au cours du temps sous l'effet des irrigations répétées. Ainsi, la texture souple et aérée, drainante, du substrat neuf devient compacte et asphyxiante en fin de production. Cet inconvénient est d'autant plus préoccupant que traditionnellement la seconde moitié du cycle de production a lieu en période estivale. On a donc concordance entre une période nécessitant beaucoup d'arrosage et un substrat organique déjà dégradé car en place depuis plusieurs mois. La dégradation du substrat entraîne une asphyxie progressive des racines et favorise le développement de maladies fongiques graves par un affaiblissement de la plante. Les conséquences, à court terme, sont la destruction des racines et donc des pertes de production importantes. A moyen terme, l'absence de racines et le développement des maladies entraîne une perte totale de production.

Le document FR 208 599 décrit un profilé en produit mousse de forme trapézoïdale pour la culture ou le forçage hydroponique de plantes entouré extérieurement d'une feuille d'un matériau imperméable à l'eau muni de perforations, ledit profilé comportant un évidement longitudinale permettant d'augmenter sa surface externe.

Toutefois la mousse constituant le profilé est une matière inerte qui, par sa composition chimique, ne peut capter les éléments nutritifs à moyen et long terme contrairement aux produits organiques.

D'autre part les matières inertes telles que les produits mousses sont un problème à court terme puisque ce sont des matières non recyclables. Par ailleurs un produit mousse ne peut pas être compacté de manière suffisante pour être rehumecté pour reprendre sa forme initiale.

La présente invention a pour but de remédier à ces inconvénients en proposant un dispositif de pain horticole à substrat organique qui permet d'obtenir de meilleures qualités de drainage des solutions nutritives et d'obtenir un bon compactage.

Le dispositif de pain horticole selon l'invention comprend un pain de substrat organique entouré d'une enveloppe étanche à l'eau et il se caractérise essentiellement en ce que ledit pain de substrat organique est constitué de fibres organiques compactées de dimensions variables et comporte à sa face inférieure au moins une rainure de drainage disposée parallèlement à l'un des côtés dudit pain, tout le long dudit côté.

La ou les rainures ménagées à la base du pain de substrat peuvent être longitudinales ou transversales et leur nombre peut varier en fonction des dimensions du pain.

Lors de l'expansion du pain de substrat, sa structure fibreuse doit permettre de conserver la forme initiale de la rainure. On utilisera donc de préférence des fibres de coco, mélangées ou non à de la poussière de coco.

La ou les rainures ménagées à la face inférieure du pain de substrat facilitent l'évacuation de l'eau en la canalisant et favorisent l'aération du substrat en augmentant sa surface d'échange avec l'air. Il en résulte une augmentation de la capacité de drainage et donc une diminution notable du risque d'asphyxie racinaire.

Les rainures de drainage peuvent être de forme variable, par exemple rectangulaire, arrondie, ovale ou autre, toutefois une forme rectangulaire est préférée car elle assure une plus grande surface de contact du substrat avec l'air.

A titre d'exemple une rainure de drainage rectangulaire peut mesurer 2,5 cm de large et 2 cm de haut, ce qui donne après expansion du pain une rainure de 2,5 à 3 cm de large et 5 à 6 cm de haut.

Selon les dimensions du pain de substrat, le nombre des rainures de drainage peut aller de 1 à 3 pour les rainures longitudinales et de 3 à 10 pour les rainures transversales, ceci pour les pains de substrat standard du commerce, étant entendu que leur nombre peut être adapté aux conditions d'utilisation.

Dans un mode de réalisation particulier de l'invention, la rainure de drainage peut abriter un tube microporeux ou un tube perforé, par exemple un tube de polypropylène microporeux, destiné à augmenter la durée de vie du pain de substrat en empêchant le comblement progressif de la rainure dans le temps.

L'enveloppe du pain horticole selon l'invention est réalisée en une matière plastique étanche à l'eau, comme le polyéthylène ou le polychlorure de vinyle, et ses dimensions sont suffisantes pour qu'elle puisse contenir le pain de substrat après sa saturation en eau.

Dans un mode de réalisation préférentiel du dispositif selon l'invention, l'enveloppe comporte à sa face supérieure des ouvertures prédécoupées, obturées par des pastilles ou une bande fixées à l'aide d'un produit adhésif.

Les ouvertures ménagées dans l'enveloppe peuvent être de forme ronde, carrée ou rectangulaire et leur taille correspond à des formats standards des mottes de semis ou de bouturage. Le nombre de ces ouvertures et leur répartition est variable selon le format des sacs et les modes de conduite culturale choisis.

Les ouvertures prédécoupées dans l'enveloppe et recouvertes de pastilles ou d'une bande permettent une mise en place rapide et facile du goutte à goutte pour la saturation en eau du substrat, ainsi qu'une installation rapide et facile des plants sur ledit substrat. De plus, elles suppriment entièrement les risques d'accidents liés à l'utilisation d'outils tranchants.

Ainsi, quand l'utilisateur veut installer le goutte à goutte, il lui suffit de décoller légèrement la bande adhésive et d'introduire le goutteur. Puis, lors de la plantation, un mouvement rapide suffit pour ôter partiellement ou totalement les pastilles ou la bande et permettre la mise en place des plants sur le substrat.

Les pastilles ou la bande qui obturent les ouvertures avant l'utilisation du pain horticole sont réalisées en une matière plastique souple imperméable et le produit adhésif utilisé pour les coller est de préférence non soluble dans l'eau et facilement décollable.

Le dispositif selon l'invention peut comporter en outre, de manière avantageuse, répartis convenablement sur la longueur du sac, des élastiques dont la tension est suffisante pour maintenir l'enveloppe en contact avec le substrat organique compacté, sans toutefois empêcher la bonne expansion de ce dernier lors de sa saturation en eau.

Ainsi, dans le cas de l'utilisation de plaques de polystyrène, ces élastiques, en maintenant le substrat centré dans le sac, permettent d'éviter tout déséquilibre par l'accumulation d'eau et limitent par conséquent les risques de glissement et de chute des sacs.

Les dessins annexés sont fournis à titre d'illustration de la présente invention, vis-à-vis de laquelle ils ne présentent aucun caractère limitatif.

Dans ces dessins :

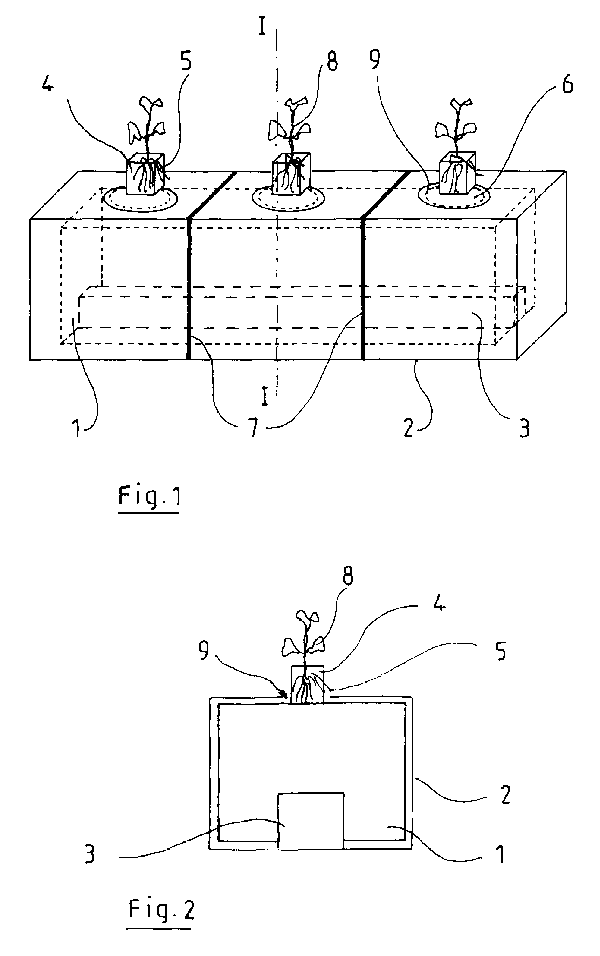

- la figure 1 est une vue en perspective d'un dispositif selon l'invention
- la figure 2 est une vue en coupe suivant la ligne 1-1 de la figure 1

Si on se réfère à ces dessins, on voit que le dispositif selon l'invention comporte un pain 1 de substrat organique présentant la forme d'un parallélépipède rectangle. Le pain 1 est constitué par un amalgame de fibres compactées, par exemple de fibres de coco.

Le pain de substrat 1 présente sur sa plus grande face inférieure une rainure de drainage 3 longitudinale réalisée, lors du compactage du produit, à l'aide d'un moule.

Le pain 1 est enfermé dans une enveloppe de matière plastique 2 de même forme mais de plus grandes dimensions, étanche à l'eau.

Sur le dessus du pain, des ouvertures circulaires 9 sont découpées dans l'enveloppe 2 pour la mise en place des cubes 4 contenant les racines 5 des plants 8 directement sur le pain 1 lors de la plantation. Avant cette opération, chaque ouverture 9 est obturée par une pastille 6 enduite d'un adhésif facilement décollable.

Lorsque le pain 1 est suffisamment imprégné d'eau, on enlève les pastilles 6 et on dispose les plants 8 sur les ouvertures 9. On peut ensuite, par différents procédés, par exemple le goutte à goutte, apporter la solution nutritive.

L'enveloppe 2 est entourée d'élastiques 7 permettant le gonflement du pain 1 sans risque de déséquilibre de remplissage pouvant entraîner la chute du pain.

Le pain de substrat est constitué d'un amalgame de fibres organiques compactées de dimensions variables telles que des fibres de tourbe ou de préférence des fibres de noix de coco et notamment des fibres de noix de coco jeunes.

Par ailleurs pour une bonne homogénéité du substrat celui-ci comportera au plus 95 % de grandes fibres et au moins 5 % de petites fibres. Les petites fibres correspondent environ à des fibres de 0,5 à 4 cm et les grandes fibres correspondent à des fibres de 4 à 5 cm.

Au niveau de la fabrication du pain de substrat l'amalgame de fibres sera posé dans un moule puis compacté par une presse, tandis que la rainure pourra être obtenue par la présence d'un gabarit disposé au fond du moule.

A titre d'exemple, un pain de substrat compacté présente des dimensions de 100 cm de long, 14 cm de large et 4 cm de haut. Après saturation en eau, ses dimensions sont de l'ordre de 101 cm pour la longueur, 15 cm pour la largeur et 12 cm pour la hauteur.

Le pain de substrat comporte à sa base une rainure de drainage longitudinale et médiane de 2,5 cm de large et 2 cm de haut. La rainure de drainage après saturation en eau du substrat présente des dimensions de l'ordre de 2,5 à 3 cm pour la largeur et 5 à 6 cm pour la hauteur.

Le pain de substrat est enveloppé dans un sac de polyéthylène opaque blanc-noir présentant ces mêmes dimensions, et comportant trois ouvertures circulaires prédécoupées de 10 cm de diamètre, espacées de 25 cm, les deux plus excentrées à 10 cm des extrémités du sac.

Les trois ouvertures circulaires sont recouvertes par une bande adhésive de la longueur du sac, faite d'un film de polyéthylène enduit d'un adhésif non hydrosoluble et facilement décollable.

Le même pain de substrat compacté de 14 cm pourra présenter deux rainures de 2,5 cm de large disposées chacune à 3 cm du bord.

Dans un pain de substrat de 17,5 cm de large on pourra ménager deux rainures de 4 cm de large, disposées chacune à 3,2 cm du bord.

La saturation en eau du substrat conduisant à un rapport d'augmentation en hauteur d'environ 3, les dimensions de la rainure sont multipliées par ce même coefficient.

La présence des fibres permet d'obtenir, après un apport de la quantité adéquate d'une solution nutritive ou d'eau, un pain gonflé dont les dimensions finales sont proportionnelles à celles de ce dernier lorsqu'il est compacté. La structure du substrat selon la présente invention permet la fabrication de pains compactés comportant une rainure de drainage qui sera toujours présente et fonctionnelle après le gonflement du pain du fait de la rigidité structurelle et de l'augmentation proportionnelle des dimensions du pain de substrat organique lors de son humectation conférée par les fibres. En outre les fibres organiques confèrent au pain de substrat une certaine résistance à l'écrasement et permet de conserver une structure aérée au niveau des racines.

## Revendications

1. Dispositif de pain horticole destiné à être utilisé dans des systèmes de culture hors sol, du type comprenant un pain de substrat (1) entouré d'une enveloppe souple (2) étanche à l'eau, caractérisé en ce que le pain de substrat est constitué d'un amalgame de fibres organiques compactées de dimensions variables (1) et en ce qu'il comporte à sa face inférieure, sur toute sa longueur ou toute sa largeur, au moins une rainure de drainage (3).

2. Dispositif selon la revendication 1 caractérisé en ce que le pain de substrat organique (1) est parallélépipédique et la rainure est disposée longitudinalement ou transversalement.

3. Dispositif selon la revendication 1 ou la revendication 2, caractérisé en ce que la rainure (3) mesure environ 2,5cm de large et 2 cm de haut.

4. Dispositif selon l'une des précédentes revendications, caractérisé en ce que l'enveloppe (2) est une enveloppe opaque de matière plastique comme le polyéthylène ou le polychlorure de vinyle.

5. Dispositif selon la revendication 4, caractérisé en ce que l'enveloppe (2) est une enveloppe de polyéthylène à deux couches, blanche et noire, coextrudées.

6. Dispositif selon l'une des revendications précédentes, caractérisé en ce que l'enveloppe (2) comporte à sa face supérieure des ouvertures prédécoupées (3) recouvertes de pastilles (6) ou d'une bande enduites d'une couche d'adhésif non soluble dans l'eau et facilement décollable.

7. Dispositif selon la revendication 6, caractérisé en ce que les ouvertures prédécoupées (3) sont de forme et de taille adaptées aux formes et formats standard des mottes de semis ou de bouturage.

8. Dispositif selon la revendication 6, caractérisé en ce que des élastiques (7) sont répartis sur la longueur de l'enveloppe (2) pour la maintenir en contact avec le pain de substrat (1) sans empêcher l'expansion de ce dernier lors de sa saturation en eau.

9. Dispositif selon l'une quelconque des revendications précédentes caractérisé en ce que les fibres sont des fibres de tourbe ou de noix de coco.

10. Dispositif selon la revendication 9 caractérisé en ce que le pain de substrat comporte au plus 95 % de grandes fibres et au moins 5 % de petites fibres.
